# EUROPEAN PATENT SPECIFICATION

(11) **EP 3 617 946 B1**
(45) Date of publication and mention of the grant of the patent: **03.01.2024**
(21) Application number: 19802029.9
(22) Date of filing: 16.05.2019
(51) Int. Cl.: H04M 1/656, H04L 12/18, H04N 7/15, G10L 25/57, H04M 3/42, G06V 10/82, G06V 10/764, G06V 40/16, G10L 25/87, G06F 3/16, H04M 3/56

(54) **CONTEXT ACQUISITION METHOD AND DEVICE BASED ON VOICE INTERACTION**
KONTEXTERFASSUNGSVERFAHREN UND VORRICHTUNG AUF DER BASIS VON SPRACHINTERAKTION
PROCÉDÉ ET DISPOSITIF D'ACQUISITION DE CONTEXTE BASÉS SUR UNE INTERACTION VOCALE

(30) Priority: 02.07.2018 CN 201810709792
(43) Date of publication of application: 04.03.2020
(73) Proprietor: BEIJING BAIDU NETCOM SCIENCE TECHNOLOGY CO., LTD., Beijing 100085 (CN)
(72) Inventor: LIANG, Yang, Haidian District, Beijing 100085 (CN); LIU, Kun, Haidian District, Beijing 100085 (CN); QIAO, Shuangshuang, Haidian District, Beijing 100085 (CN); LIN, Xiangyue, Haidian District, Beijing 100085 (CN); HAN, Chao, Haidian District, Beijing 100085 (CN); ZHU, Mingfa, Haidian District, Beijing 100085 (CN); GUO, Jiangliang, Haidian District, Beijing 100085 (CN); LI, Xu, Haidian District, Beijing 100085 (CN); LIU, Jun, Haidian District, Beijing 100085 (CN); LI, Shuo, Haidian District, Beijing 100085 (CN); YIN, Shiming, Haidian District, Beijing 100085 (CN)
(74) Representative: Gill Jennings & Every LLP
(86) International application number: PCT/CN2019/087203
(87) International publication number: WO 2020/007129

(56) References cited:
- EP-A1- 3 147 827
- EP-A1- 3 312 762
- WO-A1-2018/107605
- CN-A- 106 683 680
- CN-A- 106 782 563
- CN-A- 107 808 145
- CN-A- 108 920 639
- CN-A- 108 920 640
- US-A1- 2013 144 616
- US-A1- 2016 225 133
- US-A1- 2016 379 107
- Dissertation ET AL: "Face Image Analysis With Convolutional Neural Networks", , 1 January 2007 (2007-01-01), XP055168388, Retrieved from the Internet: URL:http://lmb.informatik.uni-freiburg.de/ papers/download/du_diss.pdf [retrieved on 2015-02-09]
- SHARMA S ET AL: "FAREC - CNN based efficient face recognition technique using Dlib", 2016 INTERNATIONAL CONFERENCE ON ADVANCED COMMUNICATION CONTROL AND COMPUTING TECHNOLOGIES (ICACCCT), IEEE, 25 May 2016 (2016-05-25), pages 192-195, XP033051379, DOI: 10.1109/ICACCCT.2016.7831628 [retrieved on 2017-01-24]
- MARIANA-IULIANA GEORGESCU ET AL: "Local Learning with Deep and Handcrafted Features for Facial Expression Recognition", ARXIV.ORG, CORNELL UNIVERSITY LIBRARY, 201 OLIN LIBRARY CORNELL UNIVERSITY ITHACA, NY 14853, 29 April 2018 (2018-04-29), XP081620339, DOI: 10.1109/ACCESS.2019.2917266

## Description

### TECHNICAL FIELD

Embodiments of the present invention relate to the field of voice interaction technology, and in particular to a context acquiring method based on voice interaction and a device.

### BACKGROUND

With development of artificial intelligence technology, research and use of intelligent voice interactive products have attracted much attention. The intelligent voice interaction is an interaction mode based on voice input, and a user can input his own request by voice, and the product can respond with corresponding content according to intention of the request.

In the prior art, in an application scene of an intelligent service robot, such as a welcome robot, a police robot, etc., there are often scenes in which a plurality of people simultaneously interact with the intelligent service robot. When a plurality of people talk to the robot, if the source of content of a conversation cannot be identified, context of the conversation cannot be accurately acquired, and accurate service cannot be provided to the user, resulting in a bad conversation experience. At present, a user is identified by natural language understanding based on meaning of the conversation under the assumption that there is no content of different topics in the conversation content of a same user and that the themes of the conversation content of two users do not overlap, so as to acquire the conversation context of the same user.

However, the assumption based on natural language understanding in practical applications is not always true, resulting in a higher error rate in acquiring a voice conversation context.

In the prior art, it is known from application US2013/0144616A1, techniques for monitoring user utterances to generate a conversation context. It is also known from the application WO2018/107605A1, techniques using audio and video acquisition, for recognizing voice and face of a speaker to generate written records according to a text information, recognition starting time, an identity tag of a current speaker and the mood of the current speaker.

### SUMMARY

The present invention is set out in the appended set of claims. Embodiments of the present invention provides a context acquiring method based on voice interaction and a device, so as to overcome a problem of high error rate in acquiring a voice conversation context.

In a first aspect, an embodiment of the present invention provides a context acquiring method based on voice interaction, including:
acquiring a scene image collected by an image collection device at a voice start point of a current conversation, and extracting a face feature of each user in the scene image;
if it is determined that there is a second face feature matching a first face feature according to the face feature of each user and a face database, acquiring a first user identifier corresponding to the second face feature from the face database, wherein the first face feature is a face feature of a user, and the second face feature is a face feature of a user in conversation state stored in the face database; and determining whether a stored conversation corresponding to the first user identifier is stored in a voice database;
if it is determined that a stored conversation corresponding to the first user identifier is stored in a voice database, determining a context of a voice interaction according to the current conversation and the stored conversation, and after a voice end point of the current conversation is obtained, storing the current conversation into the voice database; if it is determined that the stored conversation corresponding to the first user identifier is not stored in the voice database, storing the current conversation and the first user identifier into the voice database associatedly.

In a possible design, if it is determined that there is no second face feature matching the first face feature according to the face feature of each user and the face database, the method further includes:
analyzing parameters including the face feature of each user, acquiring a target user in the conversation state, and generating a second user identifier of the target user; and
when the voice end point is detected, storing the current conversation and the second user identifier into the voice database associatedly, and storing the face feature of the target user and the second user identifier into the face database associatedly.

By storing the current conversation and the second user identifier into the voice database associatedly, and storing the face feature of the target user and the second user identifier into the face database associatedly, a context can be acquired in the stored conversation based on the content in the face database and the voice database when the user performs voice interaction with the terminal again,. The face database and the voice database are set separately to facilitate separate storage and maintenance of the face database and the voice database.

In a possible design, determining a context of a voice interaction according to the current conversation and the stored conversation, includes:
acquiring a voice start point and a voice end point of a last conversation corresponding to the first user identifier from the voice database according to the first user identifier; and
if it is determined that a time interval between the voice end point of the last conversation and the voice start point of the current conversation is less than a preset interval, determining the context of the voice interaction according to the current conversation and the stored conversation.

If the time interval is less than the preset interval, it means that the last conversation and the current conversation are more likely to be a context conversation, and if the time interval is greater than or equal to the preset interval, it indicates that the conversation is a previous conversation of the user for a topic, and cannot be regarded as a current context conversation. By determining whether the time interval between the voice end point of the last conversation and the voice start point of the current conversation is less than the preset interval, the context of the current conversation can be more accurately determined, and the accuracy of context acquiring is improved.

In a possible design, if it is determined that the time interval between the voice end point of the last conversation and the voice start point of the current conversation is greater than or equal to the preset interval, the method further includes:
deleting the first user identifier and a corresponding stored conversation stored associated from the voice database.

If the time interval is greater than or equal to the preset interval, it indicates that the conversation is the last conversation of the user for a topic, and cannot be regarded as the current context conversation. Thereby, the first user identifier and the corresponding stored conversation stored associatedly are deleted from the voice database, so that the data in the voice database can be kept as new data.

In a possible design, the method further includes:
deleting a third user identifier which is not matched within a preset time period and a corresponding face feature from the face database.

By using the deletion method, associatedly stored the user identifier and the face feature may be deleted in batches, thereby improving deletion efficiency, enabling data in the face database to be kept new, avoiding redundancy of the face database.

In a possible design, extracting the face feature of each user in the scene image, includes:
performing a matting process on the scene image to obtain a face image of each face; and
inputting a plurality of face images into a preset face feature model sequentially, and acquiring the face feature of each user sequentially output by the face feature model.

Acquiring the user's face feature by the face feature model, has not only a faster processing speed, but also high accuracy.

In a possible design, before inputting the plurality of face images into the preset face feature model, the method further includes:
acquiring a face training sample, the face training sample including a face image and a label;
acquiring, according to the face training sample, an initial face feature model after training; the initial face feature model including an input layer, a feature layer, a classification layer, and an output layer; and
deleting the classification layer in the initial face feature model to obtain the preset face feature model.

Through the above model training process, the initial face feature model is obtained, and the classification layer in the initial face feature model is deleted to acquire the preset face feature model. Since the classification layer is deleted, when the preset face feature model is used, when the face image is acquired from the scene image and input into the face feature model, the face feature model can output the face feature directly instead of outputting a classification result.

In a possible design, the face feature model is a deep convolutional neural network model, the feature layer including a convolution layer, a pooling layer, and a fully connected layer.

Using such a deep neural network model with convolution and pooling operations, it is highly robust to image deformation, blur, noise, etc., and has higher generalization for classification tasks.

In a second aspect, an embodiment of the present invention provides a context acquiring device based on voice interaction, including:
an extracting module, configured to acquire a scene image collected by an image collection device at a voice start point of a current conversation, and extract a face feature of each user in the scene image;
a matching module, configured to if it is determined that there is a second face feature matching a first face feature according to the face feature of each user and the face database, acquire a first user identifier corresponding to the second face feature from the face database, where the first face feature is a face feature of a user, and the second face feature is a face feature of a user in conversation state stored in the face database; and
an acquiring module, configured to, if it is determined that a stored conversation corresponding to the first user identifier is stored in the voice database, determine a context of a voice interaction according to the current conversation and the stored conversation, and after a voice end point of the current conversation is obtained, store the current conversation into the voice database, and if it is determined that the stored conversation corresponding to the first user is not stored in the voice database, store the current conversation and the first user identifier into the voice database associatedly.

In a possible design, the matching module is further configured to,
if it is determined that there is no second face feature matching the first face feature according to the face feature of each user and a face database, analyze parameters comprising the face feature of each user, acquire a target user in conversation state, and generate a second user identifier of the target user; and
when the voice end point is detected, store the current conversation and the second user identifier into the voice database associatedly, and store the face feature of the target user and the second user identifier into the face database associatedly.

In a possible design, the acquiring module is specifically configured to:
acquire a voice start point and a voice end point of a last conversation corresponding to the first user identifier from the voice database according to the first user identifier; and
if it is determined that a time interval between the voice end point of the last conversation and the voice start point of the current conversation is less than a preset interval, determine the context of the voice interaction according to the current conversation and the stored conversation.

In a possible design, the acquiring module is further configured to:
if it is determined that the time interval between the voice end point of the last conversation and the voice start point of the current conversation is greater than or equal to the preset interval, delete the first user identifier and a corresponding stored conversation stored associatedly from the voice database.

In a possible design, the matching module is further configured to:
delete a third user identifier which is not matched within a preset time period and a corresponding face feature from the face database.

In a possible design, the extracting module is specifically configured to:
perform a matting process on the scene image to obtain a face image of each face; and
input a plurality of face images into a preset face feature model sequentially, and acquire the face feature of each user sequentially output by the face feature model.

In a possible design, further including: a modeling module;
the modeling module is configured to, before sequentially input the plurality of face images into the preset face feature model,
acquire a face training sample, the face training sample including a face image and a label;
acquire, according to the face training sample, an initial face feature model after training; the initial face feature model including an input layer, a feature layer, a classification layer, and an output layer; and
delete the classification layer in the initial face feature model to obtain the preset face feature model.

In a possible design, the face feature model is a deep convolutional neural network model, and the feature layer includes a convolution layer, a pooling layer, and a fully connected layer.

In a third aspect, an embodiment of the present invention (not encompassed by the claimed invention) provides a context acquiring device based on voice interaction, includes: at least one processor and a memory;
the memory stores computer-executable instructions;
the at least one processor executes the computer-executable instructions stored in the memory, to cause the at least one processor to perform the context acquiring method based on voice interaction as described in the first aspect or various possible designs of the first aspect.

In a fourth aspect, an embodiment of the present invention provides a computer readable storage medium, the computer readable storage medium stores computer-executable instructions, and when a processor executes the computer-executable instructions, the context acquiring method based on voice interaction as described in the first aspect or various possible designs of the first aspect is implemented.

The context acquiring method based on voice interaction and the device provided by the embodiments, acquire a scene image collected by an image collection device at a voice start point of a current conversation, and extract a face feature of each user in the scene image. If it is determined that there is a second face feature matching a first face feature according to the face feature of each user and a face database, a first user identifier corresponding to the second face feature is acquired from the face database, where the first face feature is a face feature of the user, and the second face feature is a face feature of the user in a conversation state stored in the face database, and accurate identification of the user is achieved through face recognition. If it is determined that a stored conversation corresponding to the first user identifier is stored in a voice database, the context of the voice interaction is determined according to the current conversation and the stored conversation, and after a voice end point of the current conversation is obtained, the current conversation is stored into the voice database. A stored conversation belonging to the same user as the current conversation can be acquired by the user identifier, and the context of the voice interaction is acquired based on the conversation of the same user, thereby avoiding use of the conversation of different users as the context, and improving the accuracy of the context.

### BRIEF DESCRIPTION OF THE DRAWINGS

In order to illustrate the embodiments of the present invention or the technical solutions in the prior art more clearly, a brief description of the drawings used in the embodiments or the prior art description will be briefly described below. Obviously, the drawings in following description are some embodiments of the present invention, and those skilled in the art can acquire other drawings according to the drawings without any inventive labor.
FIG. 1 is a system architecture diagram of a context acquiring method based on voice interaction according to an embodiment of the present invention;
FIG. 2 is a first flowchart of a context acquiring method based on voice interaction according to an embodiment of the present invention;
FIG. 3 is a second flowchart of a context acquiring method based on voice interaction according to an embodiment of the present invention;
FIG. 4 is a schematic structural diagram of a face feature model according to an embodiment of the present invention;
FIG. 5 is a schematic structural diagram of a context acquiring device based on voice interaction according to an embodiment of the present invention;
FIG. 6 is a schematic hardware structural diagram of a context acquiring device based on voice interaction according to an embodiment of the present invention.

### DETAILED DESCRIPTION OF THE EMBODIMENTS

In order to make the objectives, technical solutions, and advantages of the embodiments of the present invention more clear, the technical solutions in the embodiments of the present invention are clearly and completely described below in conjunction with the drawings in the embodiments of the present invention. Obviously, the described embodiments are a part of the embodiments of the invention, rather than all of the embodiments. All other embodiments acquired by those skilled in the art based on the embodiments of the present invention without creative efforts are within the scope of the present invention.

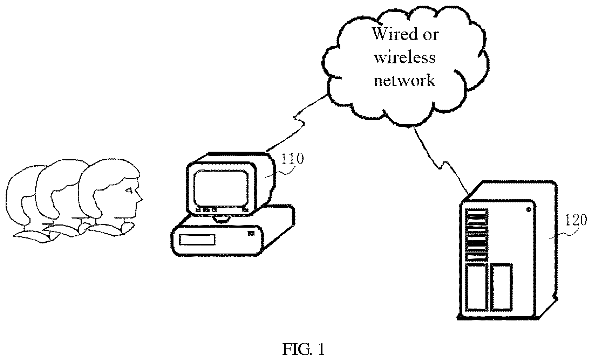

FIG. 1 is a system architecture diagram of a context acquiring method based on voice interaction according to an embodiment of the present invention. As shown in FIG.1, the system includes a terminal 110 and a server 120. The terminal 110 can be a device with a voice interaction function, such as a story machine, a mobile phone, a tablet, a vehicle-mounted terminal, a welcome robot, a police robot, and the like.

The implementation manner of the terminal 110 in this embodiment is not particularly limited, as long as the terminal 110 can perform voice interaction with a user. In this embodiment, the terminal 110 further includes an image collection device. The image collection device can collect images of users who are in conversation with the terminal 110. The image collection device can be a camera, a video camera, etc. The server 120 can provide various online services, and can provide corresponding question and answer results for the user's questions.

The embodiment of the present invention is also applicable to a process in which a plurality of users have conversations with the terminal 110. The process in which a plurality of users have conversations with the terminal 110 involved in the embodiment may be: when a user A and the terminal 110 are in a conversation, a user B pipes up and talks to the terminal 110 in a gap of the conversation between the user A and the terminal 110. At this time, the user A and the user B interact with the terminal 110 alternately, thereby forming a multi-person conversation scene.

The embodiment of the invention identifies a user based on a voiceprint, and can acquire the context of the user, for example, can acquire the context of the user A and the context of the user B in a process where the user A and the user B interact with the terminal simultaneously, thereby reducing the error rate of context acquisition. After acquiring the context of a same user's voice interaction, combined with the context, a question and answer result is fed back to the user to improve the user experience.

The execution body of the embodiment of the present invention may be the server, where the terminal sends a conversation to the server after acquiring the conversation input by the user, and the server returns a question and answer result of the conversation. Those skilled in the art can understand that when the function of the terminal is sufficiently powerful, the terminal can also feedback the question and answer result by itself after acquiring the conversation. A context acquiring method based on voice interaction provided by the embodiments of the present invention is described in detail below by taking a server as an execution body.

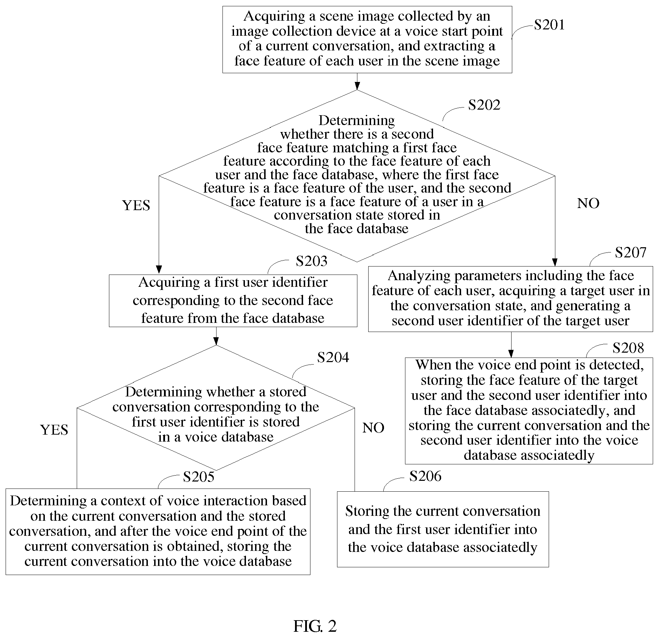

FIG. 2 is a first flowchart of a context acquiring method based on voice interaction according to an embodiment of the present invention, As shown in FIG. 2, the method includes:
S201, acquiring a scene image collected by an image collection device at a voice start point of a current conversation, and extracting a face feature of each user in the scene image.

With the development of human-computer interaction technology, voice recognition technology shows its importance. In voice recognition systems, voice endpoint detection technology is a very important technology, which is also commonly known as voice activity detection (VAD). Voice endpoint detection refers to find a voice start point and a voice end point of a voice part in a continuous sound signal. The specific implementation of the voice activity detection technology is not specifically limited in this embodiment. The execution entity of the voice activity detection technology may be the terminal mentioned above, or the terminal may send the voice to the server in real time and the server performs.

A current conversation and a stored conversation in this embodiment refer to a continuous voice input by the user to the terminal, i.e. a sentence. When describing "having a conversation", the "conversation" can be understood as an action performed. The "conversation" of this embodiment can also be expressed as a noun in some scenes. For word class of the "conversation", it can be determined according to the language description scene.

When the voice start point of the current conversation is detected, a scene image is acquired which is collected by the image collection device at the voice start point. That is, when a user performs a voice interaction with the terminal and speaks to the terminal, the scene image collected in the current scene is acquired. If there are a plurality of people facing the terminal, since there is a conversation, so in the image of the current scene, there is a user facing the terminal's microphone with the user's lip shape being a speaking lip shape, and at the same time, there may also be users with lateral or other orientations relative to the microphone of the terminal.

After acquiring the scene image, the face feature of each user is extracted from the scene image, for example, a face feature may be extracted by a face feature model.

In the extraction process, the face feature of the user is extracted per single user. Specifically, a matting process is performed on a scene image to acquire the face image of each face; a plurality of face images are input into the preset face feature model in turn, and the face feature of each user is sequentially outputted by the face feature model.

The face feature may be a multi-dimensional feature, for example, a multi-dimensional vector, with a vector of each dimension representing a feature, such as an eyebrow feature, an eye feature, a nose feature, etc., which will not be listed herein one by one in this embodiment.

In this embodiment, the terminal can also schedule the server according to a load of each server, that is, the steps of the embodiment are performed by a server with a light load.
S202, determining whether there is a second face feature matching a first face feature according to the face feature of each user and a face database, where the first face feature is a face feature of the user, and the second face feature is a face feature of a user in a conversation state stored in the face database; if yes, executing S203, if no, executing S207;
5203, acquiring a first user identifier corresponding to the second face feature from the face database.

After acquiring the face feature of each user, the face feature of each user is matched with the face feature in the face database to determine whether a user's first face feature can match the second face feature in the face database.

It can be understood by those skilled in the art that when a user faces the microphone in the forward direction, other users cannot face the microphone in the forward direction, so there is one user who is in the conversation state with the microphone in the collected scene image, therefore, it can be determined whether there is a user whose first face feature matches the second face feature. The matching in this embodiment can be understood as two face features with the highest similarity under the premise that the similarity of the face features is greater than a preset value, and the similarity can be a cosine similarity of the two face features.

When there is a face feature of a user capable of matching a second face feature in the conversation state (a state of opening mouth and speaking) in the face database, a first user identifier corresponding to the second face feature is acquired from the face database, then execute S204, S205 and S206 in sequence. The face feature in the conversation state and the corresponding user identifier are stored associatedly in the face database.

When there is no user's face feature that can match the second face feature in the conversation state (a state of opening mouth and speaking) in the face database, S207 and S208 are sequentially executed.
S204, determining whether a stored conversation corresponding to the first user identifier is stored in the voice database, and if yes, executing S205; if not, executing S206;
5205, determining a context of voice interaction based on the current conversation and the stored conversation, and after a voice end point of the current conversation is obtained, storing the current conversation into the voice database;
5206, storing the current conversation and the first user identifier into the voice database associatedly.

When there is a face feature of a user capable of matching the second face feature in the conversation state (the state of opening mouth and speaking) in the face database, it is determined whether there is a stored conversation corresponding to the first user identifier stored in the voice database. The user identifier and corresponding conversation are stored associatedly in the voice database.

If the stored conversation corresponding to the first user identifier is stored in the voice database, it indicates that the current conversation is not a first sentence input by the user to the terminal within a preset time period, then the context of voice interaction is determined based on the current conversation and the stored conversation, i.e., determining the context of the current conversation in the stored conversation. At this time, in a limited number of conversations, combined with natural language understanding, the stored conversation related to the current conversation can be acquired, that is, the context is acquired. After acquiring the voice end point of the current conversation, the current conversation is stored into the voice database, and an association between the current conversation and the first user identifier is established in the voice database.

If the stored conversation corresponding to the first user identifier is not stored in the voice database, the current conversation is the first sentence voice input by the user to the terminal within a preset time period, where the preset time period is a preset time period before the current time, for example, half an hour before the current time. At this time, it is considered that the current conversation does not have a context, and then the current conversation and the first user identifier are stored into the voice database associatedly.

In this embodiment, the voice database and the face database can also be combined into one database, that is, user identifier, corresponding face feature, and user conversation are stored associatedly in one database. In an embodiment, the face feature and corresponding user conversation can also be stored associatedly in the database directly.

At this time, if it is determined, according to the face feature of each user and the database, that there is a second face feature matching the first face feature, then the stored conversation corresponding to the second face feature is acquired from the database, the context of voice interaction is determined based on the current conversation and the stored conversation, and after the voice end point of the current conversation is obtained, the current conversation is stored into the voice database.

In this embodiment, the face database and the voice database are set separately to facilitate separate storage and maintenance of the face database and the voice database.

S207, analyzing parameters including the face feature of each user, acquiring a target user in the conversation state, and generating a second user identifier of the target user.

S208, when the voice end point is detected, storing the face feature of the target user and the second user identifier into the face database associatedly, and storing the current conversation and the second user identifier into the voice database associatedly.

When there is no user's face feature that can match the second face feature in the conversation state (the state of opening mouth and speaking) in the face database, it is indicated that the current user has never had a voice interaction with the terminal before, and at this time, the parameters including the face feature of each user are analyzed to acquire the target user in the conversation state, and the second user identifier of the target user is generated. The user identifier can be a number, a letter, etc. or a combination thereof. For another example, the user identifier of the target user may also be generated by using a hash algorithm. This embodiment does not specifically limit the implementation of the user identifier.

From this, when the voice end point is detected, the face feature of the target user and the second user identifier are stored into the face database associatedly, and the current conversation and the second user identifier are stored into the voice database associatedly, so that a context can be acquired in the stored conversation based on the content in the face database and the voice database when the user performs voice interaction with the terminal again.

The context acquiring method based on voice interaction provided by this embodiment, acquires a scene image collected by an image collection device at a voice start point of a current conversation, and extracts a face feature of each user in the scene image. If it is determined that there is a second face feature matching a first face feature according to the face feature of each user and a face database, the first user identifier corresponding to the second face feature is acquired from the face database, where the first face feature is a face feature of a user, and the second face feature is a face feature of a user in a conversation state stored in the face database, and accurate identification of users is achieved by face recognition. If it is determined that the stored conversation corresponding to the first user identifier is stored in the voice database, the context of the voice interaction is determined according to the current conversation and the stored conversation, and after the voice end point of the current conversation is obtained, the current conversation is stored into the voice database. The stored conversation belonging to the same user as the current conversation can be acquired by the user identifier, and the context of the voice interaction is obtained based on the conversation of the same user, thereby avoiding use of the conversation of different users as the context, and improving the accuracy of the context.

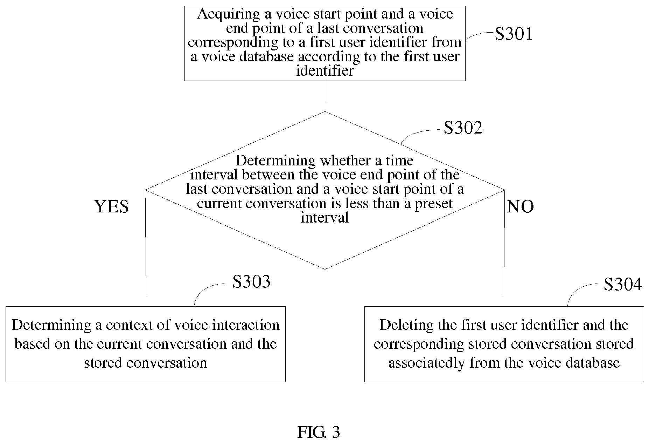

Following describes an implementation of determining context of voice interaction. FIG. 3 is a second flowchart of a context acquiring method based on voice interaction according to an embodiment of the present invention. As shown in FIG. 3, the method including:
S301, acquiring a voice start point and a voice end point of a last conversation corresponding to a first user identifier from a voice database according to the first user identifier;
S302, determining whether a time interval between the voice end point of the last conversation and a voice start point of a current conversation is less than a preset interval, if yes, executing S303, if not, executing S304;
S303, determining a context of voice interaction based on the current conversation and the stored conversation;
S304, deleting the first user identifier and the corresponding stored conversation stored associatedly from the voice database.

In a specific implementation process, the voice database stores a user identifier and each sentence corresponding to the user identifier, that is, the user identifier and at least one conversation of the user are stored associatedly. When each conversation is stored, the time of the voice start point and the time of the voice end point of the conversation are correspondingly stored.

After acquiring the first user identifier according to the face feature of the target user, the voice start point and the voice end point of the last conversation corresponding to the first user identifier are acquiring from the voice database according to the first user identifier.

Then the time interval between the voice end point of the last conversation and the voice start point of the current conversation is acquired according to the occurrence time of the voice end point of the last conversation and the occurrence time of the voice start point of the current conversation.

If the time interval is less than the preset interval, it means that the last conversation and the current conversation are more likely to be the context conversation, for example, the preset interval may be 10 minutes, 30 minutes, etc., and the implementation manner of the preset interval is not limited in this embodiment.

If the time interval is greater than or equal to the preset interval, it indicates that the conversation is a previous conversation of the user for a topic, and it is not regarded as a current context conversation. Thus, the first user identifier and corresponding stored conversation stored associatedly arc deleted from the voice database, and there is no context for the current conversation.

In an embodiment, when deleting the first user identifier and corresponding stored conversation stored associatedly from the voice database, the first user identifier and corresponding face feature stored associatedly can also be deleted from the face database.

In an embodiment, both can also be deleted asynchronously, an third user identifier that is unmatched within a preset time period and a corresponding face feature can be deleted from the face database. By using the deletion method, the user identifier and the face feature stored associatedly may be deleted in batches, thereby improving the deletion efficiency.

A person skilled in the art can understand that each time a user's conversation is acquired, the above operations are performed, so that multiple conversations of each user stored in the voice database are conversations with a time interval smaller than the preset interval. Therefore, based on all of the stored conversations of the user and the current conversation, the context of the current conversation is obtained. For example, the current conversation and all the stored conversations of the user can be used as the context of the voice interaction, and for the conversation of the same user, the context of the current conversation can also be acquired from all the stored conversations based on natural language understanding.

In this embodiment, by determining whether the time interval between the voice end point of the last conversation and the voice start point of the current conversation is less than a preset interval, the context of the current conversation can be more accurately determined, and the accuracy of context acquiring is improved.

In the above embodiment, the embodiment of the present invention acquires the face feature of each user by using the face feature model. The process of constructing the face feature model is illustrated by the following detailed embodiment.

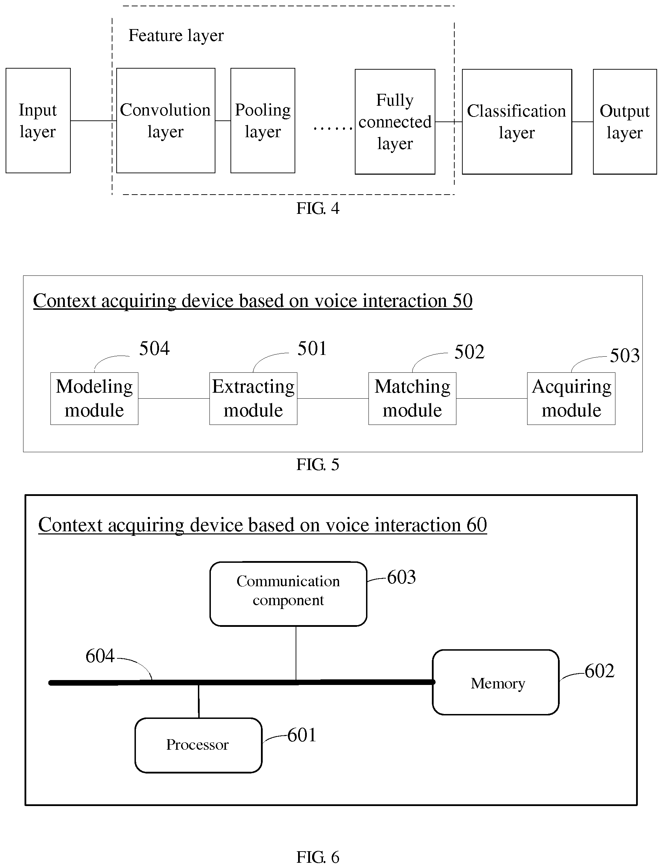

FIG. 4 is a schematic structural diagram of a face feature model according to an embodiment of the present invention. As shown in FIG. 4, the face feature model can use a Deep Convolutional Neural Network (Deep CNN). The model includes an input layer, a feature layer, a classification layer, and an output layer. In an embodiment, the feature layer includes a convolution layer, a pooling layer, and a fully connected layer. There may be a plurality of alternating convolution layers and pooling layers in the feature layer.

In a specific implementation process, for different usage scenes, based on the face feature model, a deep neural network model may be designed with different depths, different numbers of neurons, and different convolutional pooling modes.

When training the model, a face training sample is acquired, the face training sample including a face image and a label. The label is a pre-labelled classification result of each feature in the face image, and the label may be a vector in a matrix form.

The face image is input from the input layer, the input is actually a vector of matrixes, and then the convolution layer performs scanning convolution on the original image or feature map by using convolution kernels with different weights, to extract features of various meanings from the original image or feature map and output them to the feature map. The pooling layer is sandwiched between successive convolutional layers to compress the amount of data and parameters, reduce over-fitting, that is, reducing dimensionality of the feature map, and retain main features in the feature map. All neurons between the two layers have weighted connections, and generally, the fully connected layer is arranged at the end of the convolutional neural network. Finally, a result is output after the feature passing the classification layer.

Stop training when the error value between the output of the model and the label is less than a predetermined threshold that meets the business requirements. Using such a deep neural network model with convolution and pooling operations, it is highly robust to image deformation, blur, noise, etc., and has higher generalization for classification tasks.

Through the above model training process, an initial face feature model is obtained, and the classification layer in the initial face feature model is deleted to obtain the preset face feature model. Since the classification layer is deleted, when the preset face feature model is used, when the face image is acquired from the scene image by matting, the face image is input into the face feature model, the face feature model can output the face feature directly, instead of outputting the classification result.

This embodiment extracts the face feature by using a deep convolutional neural network model, to perform identity recognition, which can accurately distinguish the source of the conversation, find the conversation context of each person, and improve the conversation experience in a multi-person scene.

FIG. 5 is a schematic structural diagram of a context acquiring device based on voice interaction, according to an embodiment of the present invention. As shown in FIG. 5, the context acquiring device based on voice interaction 50 includes: an extracting module 501, a matching module 502, and an acquiring module 503. In an embodiment, a modeling module 504 is further included.

The extracting module 501 is configured to acquire a scene image collected by an image collection device at a voice start point of a current conversation, and extract a face feature of each user in the scene image.

The matching module 502 is configured to, if it is determined that there is a second face feature matching a first face feature according to the face feature of each user and a face database, acquire a first user identifier corresponding to the second face feature from the face database, where the first face feature is a face feature of a user and the second face feature is a face feature of a user in conversation state stored in the face database.

The acquiring module 503 is configured to, if it is determined that a stored conversation corresponding to the first user identifier is stored in a voice database, determine a context of a voice interaction according to the current conversation and the stored conversation, and after a voice end point of the current conversation is obtained, store the current conversation into the voice database.

In an embodiment, the matching module 502 is further configured to,
if it is determined that there is no second face feature matching the first face feature according to the face feature of each user and the face database, analyze parameters including the face feature of each user, acquire a target user in the conversation state, and generating a second user identifier of the target user; and
when the voice end point is detected, store the current conversation and the second user identifier into the voice database associatedly, and store the face feature of the target user and the second user identifier into the face database associatedly.

In an embodiment, the acquiring module 503 is specifically configured to:
acquire a voice start point and a voice end point of a last conversation corresponding to the first user identifier from the voice database according to the first user identifier; and
if it is determined that a time interval between the voice end point of the last conversation and the voice start point of the current conversation is less than a preset interval, determine the context of the voice interaction according to the current conversation and the stored conversation.

In an embodiment, the acquiring module 503 is further configured to:
if it is determined that the time interval between the voice end point of the last conversation and the voice start point of the current conversation is greater than or equal to the preset interval, delete the first user identifier and a corresponding stored conversation stored associatedly in the voice database.

In an embodiment, the matching module 502 is further configured to:
delete a third user identifier which is not matched within a preset time period and a corresponding face feature in the face database.

In an embodiment, the extracting module 501 is specifically configured to:
perform a matting process on the scene image to acquire a face image of each face; and
input a plurality of face images into a preset face feature model sequentially, and acquire the face feature of each user sequentially output by the face feature model.

The modeling module 504 is configured to, before sequentially input the plurality of face images into the preset face feature model, acquire a face training sample, the face training sample including a face image and a label;
according to the face training sample, obtain an initial face feature model after training; the initial face feature model including an input layer, a feature layer, a classification layer, and an output layer;
delete the classification layer in the initial face feature model to obtain the preset face feature model.

In an embodiment, the face feature model is a deep convolutional neural network model, and the feature layer includes a convolution layer, a pooling layer, and a fully connected layer.

The context acquiring device based on voice interaction provided in this embodiment is similar to the method embodiment in the foregoing, and the details is not described in this embodiment again.

FIG. 6 is a schematic hardware structural diagram of a context acquiring device based on voice interaction, according to an embodiment of the present invention. As shown in FIG. 6, the context acquiring device based on voice interaction 60 includes: at least one processor 601 and a memory 602. In an embodiment, the context acquiring device based on voice interaction 60 further includes a communication component 603. The processor 601, the memory 602, and the communication component 603 are connected by a bus 604.

In a specific implementation process, the at least one processor 601 executes computer-executable instructions stored by the memory 602, to cause the at least one processor 601 to perform the context acquiring method based on voice interaction as above.

The communication component 603 can perform data interaction with other devices.

For a specific implementation process of the processor 601, refer to the foregoing method embodiment, and the implementation principle and technical effects are similar, and the details are not described herein.

In the embodiment shown in the above FIG. 6, it should be understood that the processor may be a Central Processing Unit (CPU), or may be other general-purpose processor, Digital Signal Processor (DSP), Application Specific Integrated Circuit (ASIC) etc. The general-purpose processor may be a microprocessor or the processor may be any conventional processor, etc. The steps of the method disclosed in the embodiments of the present application may be directly implemented by hardware processor, or performed by a combination of hardware and software modules in the processor.

The memory may include a high-speed RAM memory, and may also include a non-volatile memory NVM, such as at least one disk memory.

The bus may be an Industry Standard Architecture (ISA) bus, a Peripheral Component (PCI) bus, or an Extended Industry Standard Architecture (ESA) bus. The bus can be divided into an address bus, a data bus, a control bus, etc. For convenience of representation, the bus in the drawing of the present application does not limit to only one bus or one type of bus.

The present application further provides a computer readable storage medium, the computer readable storage medium stores computer-executable instructions, and when a processor executes the computer-executable instructions, a context acquiring method based on voice interaction is implemented as described above.

The above computer readable storage medium, the readable storage medium may be implemented by any type of volatile or non-volatile storage device or a combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a disk or an optical disc. The readable storage medium can be any available medium that can be accessed by a general purpose or special purpose computer.

An exemplary readable storage medium is coupled to the processor, such that the processor can read information from the readable storage medium and can write information to the readable storage medium. Of course, the readable storage medium may also be an integral part of the processor. The processor and the readable storage medium may be located in an Application Specific Integrated Circuits (ASIC). Of course, the processor and the readable storage medium may also exist as discrete components in the device.

The division of the unit is only a logical function division, and actual implementation may have another division manner. For example, multiple units or components can be combined or can be integrated into another system, or some features can be ignored, or not executed. In addition, the mutual coupling or direct coupling or communication connection shown or discussed may be an indirect coupling or communication connection through some interface, device or unit, and may be electrical, mechanical or otherwise.

The unit described as a separate component may or may not be physically separated, the component displayed as a unit may be or may not be a physical unit, that is, may be located in one place, or may be distributed to multiple network units. Part or all of the units may be selected according to actual needs to achieve the purpose of the solution of the embodiment.

In addition, each functional unit in each embodiment of the present application may be integrated into one processing unit, or each unit may exist physically separately, or two or more units may be integrated into one unit.

The functions may be stored in a computer readable storage medium if implemented in the form of a software functional unit and sold or used as a standalone product. Based on such understanding, in the technical solution of the present invention, the essential part or the part that contributes to the prior art or the part of the technical solution can be embodied in a form of software product, the computer software product is stored in a storage medium and includes instructions for causing a computer device (which may be a personal computer, a server, or a network device, etc.) to perform all or part of the steps of the methods described in various embodiments of the present application. The foregoing storage medium includes: a U disk, a mobile hard disk, a Read-Only Memory (ROM), a Random Access Memory (RAM), a disk or an optical disk and other media that can store program codes.

A person of ordinary skill in the art may understand that all or part of steps of implementing the foregoing method embodiments may be completed by the program instructing relevant hardware. The aforementioned program can be stored in a computer readable storage medium. The program, when executed, performs the steps including the foregoing method embodiments; and the foregoing storage medium includes: various medium that can store program codes, such as a ROM, a RAM, a magnetic disk, or an optical disk.

Finally, it should be noted that the above embodiments are only used to explain the technical solutions of the present invention, but not to limit; although the present application has been described in detail with reference to the foregoing embodiments, those skilled in the art should understand that the technical solutions described in the foregoing embodiments may be modified, or some or all of the technical features may be equivalently replaced within the scope of the appended claims.

## Claims

1. A context acquiring method based on voice interaction, comprising:
acquiring (201), a scene image collected by an image collection device at a voice start point of a current conversation, and extracting a face feature of each user in the scene image;
if it is determined that there is a second face feature matching a first face feature according to the face feature of each user and a face database, acquiring (203), a first user identifier corresponding to the second face feature from the face database, wherein the first face feature is a face feature of a user, the second face feature is a face feature of a user in a conversation state stored in the face database; and further **characterised by**:
determining (204) whether a stored conversation corresponding to the first user identifier is stored in a voice database;
if it is determined that the stored conversation corresponding to the first user identifier is stored in the voice database, determining (205), a context of a voice interaction according to the current conversation and the stored conversation, and after a voice end point of the current conversation is obtained, storing the current conversation into the voice database; and
if it is determined that the stored conversation corresponding to the first user identifier is not stored in the voice database, storing (206) the current conversation and the first user identifier into the voice database associatedly.

2. The method according to claim 1, wherein if it is determined that there is no second face feature matching the first face feature according to the face feature of each user and the face database, the method further comprises:
analyzing (207), parameters comprising the face feature of each user, acquiring a target user in the conversation state, and generating a second user identifier of the target user; and
when the voice end point is detected, storing (208), the current conversation and the second user identifier into the voice database associatedly, and storing the face feature of the target user and the second user identifier into the face database associatedly.

3. The method according to claim 1, wherein the determining a context of a voice interaction according to the current conversation and the stored conversation, comprises:
acquiring a voice start point and a voice end point of a last conversation corresponding to the first user identifier from the voice database according to the first user identifier; and
if it is determined that a time interval between the voice end point of the last conversation and the voice start point of the current conversation is less than a preset interval, determining the context of the voice interaction according to the current conversation and the stored conversation.

4. The method according to claim 3, wherein if it is determined that the time interval between the voice end point of the last conversation and the voice start point of the current conversation is greater than or equal to the preset interval, the method further comprises:
deleting the first user identifier and a corresponding stored conversation stored associatedly from the voice database.

5. The method according to claim 1, wherein the method further comprises:
deleting a third user identifier which is not matched within a preset time period and a corresponding face feature from the face database.

6. The method according to claim 1, wherein the extracting a face feature of each user in the scene image, comprises:
performing a matting process on the scene image to acquire a face image of each face; and
inputting a plurality of face images into a preset face feature model sequentially, to acquire the face feature of each user sequentially output by the face feature model.

7. The method according to claim 6, wherein before inputting the plurality of face images into the preset face feature model sequentially, the method further comprises:
acquiring a face training sample, the face training sample comprising a face image and a label;
acquiring, according to the face training sample, an initial face feature model after training; the initial face feature model comprising an input layer, a feature layer, a classification layer, and an output layer; and
deleting the classification layer in the initial face feature model to obtain the preset face feature model.

8. The method according to claim 7, wherein the face feature model is a deep convolutional neural network model, and the feature layer comprises a convolution layer, a pooling layer, and a fully connected layer.

9. A context acquiring device (50), based on voice interaction, comprising:
an extracting module (501), configured to acquire a scene image collected by an image collection device at a voice start point of a current conversation, and extract a face feature of each user in the scene image;
a matching module (502), configured to, if it is determined that there is a second face feature matching a first face feature according to the face feature of each user and the face database, acquire a first user identifier corresponding to the second face feature from the face database, wherein the first face feature is a face feature of a user, and the second face feature is a face feature of a user in conversation state stored in the face database; and **characterised by** further comprising:
an acquiring module (503), configured to, determine whether a stored conversation corresponding to the first user identifier is stored in a voice database, if it is determined that the stored conversation corresponding to the first user identifier is stored in the voice database, determine a context of a voice interaction according to the current conversation and the stored conversation, and after a voice end point of the current conversation is obtained, store the current conversation into the voice database, and if it is determined that the stored conversation corresponding to the first user identifier is not stored in the voice database, store the current conversation and the first user identifier into the voice database associatedly.

10. The method according to claim 9, wherein the matching module (502) is configured to:
if determining that there is no second face feature matching the first face feature according to the face feature of each user and a face database, analyze parameters comprising the face feature of each user, acquire a target user in conversation state, and generate a second user identifier of the target user; and
when the voice end point is detected, store the current conversation and the second user identifier into the voice database associatedly, and store the face feature of the target user and the second user identifier into the face database associatedly.

11. The device (50) according to claim 9, wherein the acquiring module (503) is specifically configured to:
acquire a voice start point and a voice end point of a last conversation corresponding to the first user identifier from the voice database according to the first user identifier; and
if it is determined that a time interval between the voice end point of the last conversation and the voice start point of the current conversation is less than a preset interval, determine the context of the voice interaction according to the current conversation and the stored conversation.

12. The device (50) according to claim 11, wherein the acquiring module (503) is further configured to:
if it is determined that the time interval between the voice end point of the last conversation and the voice start point of the current conversation is greater than or equal to the preset interval, delete the first user identifier and corresponding stored conversation stored associatedly from the voice database.

13. The device according to claim 9, wherein the extracting module is specifically configured to:
perform a matting process on the scene image to acquire a face image of each face; and
input a plurality of face images into a preset face feature model sequentially, and acquire the face feature of each user sequentially output by the face feature model.

14. The device (50) according to claim 14, further comprises: a modeling module (504);
the modeling module (504) is configured to, before sequentially input the plurality of face images into the preset face feature model,
acquire a face training sample, the face training sample comprising a face image and a label;
acquire, according to the face training sample, an initial face feature model after training; the initial face feature model comprising an input layer, a feature layer, a classification layer, and an output layer; and
delete the classification layer in the initial face feature model to obtain the preset face feature model.

15. A computer readable storage medium, wherein the computer readable storage medium stores computer-executable instructions, and when a processor executes the computer-executable instructions, the context acquiring method based on voice interaction according to any one of claims 1 to 8 is implemented.

## Patentansprüche

1. Auf Sprachinteraktion basierendes Kontexterfassungsverfahren, umfassend:
Erfassen (201) eines Szenenbildes, das von einer Bildsammelvorrichtung an einem Sprachstartpunkt eines aktuellen Gesprächs gesammelt wird, und Extrahieren eines Gesichtsmerkmals jedes Benutzers in dem Szenenbild;
wenn bestimmt wird, dass es ein zweites Gesichtsmerkmal gibt, das mit einem ersten Gesichtsmerkmal gemäß dem Gesichtsmerkmal jedes Benutzers und einer Gesichtsdatenbank übereinstimmt, Erfassen (203) einer ersten Benutzerkennung, die dem zweiten Gesichtsmerkmal entspricht, aus der Gesichtsdatenbank, wobei das erste Gesichtsmerkmal ein Gesichtsmerkmal eines Benutzers ist, das zweite Gesichtsmerkmal ein weiteres Gesichtsmerkmal eines Benutzers in einem Gesprächszustand ist, das in der Gesichtsdatenbank gespeichert ist; und **gekennzeichnet durch**:
Bestimmen (204), ob ein gespeichertes Gespräch, das der ersten Benutzerkennung entspricht, in einer Sprachdatenbank gespeichert ist;
wenn bestimmt wird, dass das gespeicherte Gespräch, das der ersten Benutzerkennung entspricht, in der Sprachdatenbank gespeichert ist, Bestimmen (205) eines Kontextes einer Sprachinteraktion gemäß dem aktuellen Gespräch und dem gespeicherten Gespräch, und nachdem ein Sprachendpunkt des aktuellen Gesprächs erhalten wird, Speichern des aktuellen Gesprächs in der Sprachdatenbank; und
wenn bestimmt wird, dass das gespeicherte Gespräch, das der ersten Benutzerkennung entspricht, nicht in der Sprachdatenbank gespeichert ist, Speichern (206) des aktuellen Gesprächs und der ersten Benutzerkennung verknüpft in der Sprachdatenbank.

2. Verfahren nach Anspruch 1, wobei das Verfahren, wenn bestimmt wird, dass es kein zweites Gesichtsmerkmal gibt, das mit dem ersten Gesichtsmerkmal gemäß dem Gesichtsmerkmal jedes Benutzers und der Gesichtsdatenbank übereinstimmt, weiter umfasst:
Analysieren (207) von Parametern, die das Gesichtsmerkmal jedes Benutzers umfassen, Erfassen eines Zielbenutzers im Gesprächszustand und Erzeugen einer zweiten Benutzerkennung des Zielbenutzers; und
wenn der Sprachendpunkt erkannt wird, Speichern (208) des aktuellen Gesprächs und der zweiten Benutzerkennung verknüpft in der Sprachdatenbank und Speichern des Gesichtsmerkmals des Zielbenutzers und der zweiten Benutzerkennung verknüpft in der Gesichtsdatenbank.

3. Verfahren nach Anspruch 1, wobei das Bestimmen eines Kontextes einer Sprachinteraktion gemäß dem aktuellen Gespräch und dem gespeicherten Gespräch umfasst:
Erfassen eines Sprachstartpunkts und eines Sprachendpunkts eines letzten Gesprächs, das der ersten Benutzerkennung entspricht, aus der Sprachdatenbank gemäß der ersten Benutzerkennung; und
wenn bestimmt wird, dass ein Zeitintervall zwischen dem Sprachendpunkt des letzten Gesprächs und dem Sprachstartpunkt des aktuellen Gesprächs kleiner als ein voreingestelltes Intervall ist, Bestimmen des Kontextes der Sprachinteraktion gemäß dem aktuellen Gespräch und dem gespeicherten Gespräch.

4. Verfahren nach Anspruch 3, wobei, wenn bestimmt wird, dass das Zeitintervall zwischen dem Sprachendpunkt des letzten Gesprächs und dem Sprachstartpunkt des aktuellen Gesprächs größer oder gleich dem voreingestellten Intervall ist, das Verfahren weiter umfasst:
Löschen der ersten Benutzerkennung und eines entsprechenden gespeicherten Gesprächs, die verknüpft gespeichert sind, aus der Sprachdatenbank.

5. Verfahren nach Anspruch 1, wobei das Verfahren weiter umfasst:
Löschen einer dritten Benutzerkennung, die nicht innerhalb eines voreingestellten Zeitraums abgeglichen wird, und eines entsprechenden Gesichtsmerkmals aus der Gesichtsdatenbank.

6. Verfahren nach Anspruch 1, wobei das Extrahieren eines Gesichtsmerkmals jedes Benutzers im Szenenbild umfasst:
Durchführen eines Mattierungsprozesses am Szenenbild, um ein Gesichtsbild jedes Gesichts zu erfassen; und
sequentielles Eingeben einer Vielzahl von Gesichtsbildern in ein voreingestelltes Gesichtsmerkmalsmodell, um das Gesichtsmerkmal jedes Benutzers zu erfassen, das sequentiell vom Gesichtsmerkmalsmodell ausgegeben wird.

7. Verfahren nach Anspruch 6, wobei das Verfahren vor dem sequentiellen Eingeben der Vielzahl von Gesichtsbildern in das voreingestellte Gesichtsmerkmalsmodell weiter umfasst:
Erfassen einer Gesichtstrainingsprobe, wobei die Gesichtstrainingsprobe ein Gesichtsbild und eine Beschriftung umfasst;
Erfassen, gemäß der Gesichtstrainingsprobe, eines anfänglichen Gesichtsmerkmalsmodells nach dem Training; wobei das anfängliche Gesichtsmerkmalsmodell eine Eingabeschicht, eine Merkmalsschicht, eine Klassifizierungsschicht und eine Ausgabeschicht umfasst; und
Löschen der Klassifizierungsschicht im anfänglichen Gesichtsmerkmalsmodell, um das voreingestellte Gesichtsmerkmalsmodell zu erhalten.

8. Verfahren nach Anspruch 7, wobei das Gesichtsmerkmalsmodell ein Deep Convolutional Neural Network-Modell ist, und die Merkmalsschicht eine Faltungsschicht, eine Pooling-Schicht und eine vollständig verbundene Schicht umfasst.

9. Auf Sprachinteraktion basierende Kontexterfassungsvorrichtung (50), umfassend:
ein Extraktionsmodul (501), das konfiguriert ist, um ein Szenenbild zu erfassen, das von einer Bildsammelvorrichtung an einem Sprachstartpunkt eines aktuellen Gesprächs gesammelt wird, und ein Gesichtsmerkmal jedes Benutzers im Szenenbild zu extrahieren;
ein Abgleichsmodul (502), das konfiguriert ist, um, wenn bestimmt wird, dass es ein zweites Gesichtsmerkmal gibt, das mit einem ersten Gesichtsmerkmal gemäß dem Gesichtsmerkmal jedes Benutzers und der Gesichtsdatenbank übereinstimmt, eine erste Benutzerkennung, die dem zweiten Gesichtsmerkmal entspricht, aus der Gesichtsdatenbank zu erfassen, wobei das erste Gesichtsmerkmal ein Gesichtsmerkmal eines Benutzers ist und das zweite Gesichtsmerkmal ein Gesichtsmerkmal eines Benutzers im Gesprächszustand ist, das in der Gesichtsdatenbank gespeichert ist; und **dadurch gekennzeichnet, dass** sie weiter umfasst:
ein Erfassungsmodul (503), das konfiguriert ist, um zu bestimmen, ob ein gespeichertes Gespräch, das der ersten Benutzerkennung entspricht, in einer Sprachdatenbank gespeichert ist, wenn bestimmt wird, dass das gespeicherte Gespräch, das der ersten Benutzerkennung entspricht, in der Sprachdatenbank gespeichert ist, einen Kontext einer Sprachinteraktion entsprechend dem aktuellen Gespräch und dem gespeicherten Gespräch zu bestimmen, und nachdem ein Sprachendpunkt des aktuellen Gesprächs erhalten wird, das aktuelle Gespräch in der Sprachdatenbank zu speichern, und wenn bestimmt wird, dass das gespeicherte Gespräch, das der ersten Benutzerkennung entspricht, nicht in der Sprachdatenbank gespeichert ist, das aktuelle Gespräch und die erste Benutzerkennung verknüpft in der Sprachdatenbank zu speichern.

10. Verfahren nach Anspruch 9, wobei das Abgleichsmodul (502) konfiguriert ist, um:
wenn bestimmt wird, dass es kein zweites Gesichtsmerkmal gibt, das mit dem ersten Gesichtsmerkmal gemäß dem Gesichtsmerkmal jedes Benutzers und einer Gesichtsdatenbank übereinstimmt, Parameter zu analysieren, die das Gesichtsmerkmal jedes Benutzers umfassen, einen Zielbenutzer im Gesprächszustand zu erfassen, und eine zweite Benutzerkennung des Zielbenutzers zu generieren; und
wenn der Sprachendpunkt erkannt wird, das aktuelle Gespräch und die zweite Benutzerkennung verknüpft in der Sprachdatenbank zu speichern, und das Gesichtsmerkmal des Zielbenutzers und die zweite Benutzerkennung verknüpft in der Gesichtsdatenbank zu speichern.

11. Vorrichtung (50) nach Anspruch 9, wobei das Erfassungsmodul (503) im Speziellen konfiguriert ist, um:
einen Sprachstartpunkt und einen Sprachendpunkt eines letzten Gesprächs entsprechend der ersten Benutzerkennung aus der Sprachdatenbank gemäß der ersten Benutzerkennung zu erfassen; und
wenn bestimmt wird, dass das Zeitintervall zwischen dem Sprachendpunkt des letzten Gesprächs und dem Sprachstartpunkt des aktuellen Gesprächs kleiner als ein voreingestelltes Intervall ist, den Kontext der Sprachinteraktion entsprechend dem aktuellen Gespräch und dem gespeicherten Gespräch zu bestimmen.

12. Vorrichtung (50) nach Anspruch 11, wobei das Erfassungsmodul (503) weiter konfiguriert ist, um:
wenn bestimmt wird, dass das Zeitintervall zwischen dem Sprachendpunkt des letzten Gesprächs und dem Sprachstartpunkt des aktuellen Gesprächs größer oder gleich dem voreingestellten Intervall ist, die erste Benutzerkennung und das entsprechende gespeicherte Gespräch verknüpft aus der Sprachdatenbank zu löschen.

13. Vorrichtung nach Anspruch 9, wobei das Extraktionsmodul im Speziellen konfiguriert ist, um:
einen Mattierungsprozess am Szenenbild durchzuführen, um ein Gesichtsbild jedes Gesichts zu erfassen; und
eine Vielzahl von Gesichtsbildern sequentiell in ein voreingestelltes Gesichtsmerkmalsmodell einzugeben, und das Gesichtsmerkmal jedes Benutzers zu erfassen, das sequentiell vom Gesichtsmerkmalsmodell ausgegeben wird.

14. Vorrichtung (50) nach Anspruch 14, weiter umfassend: ein Modellierungsmodul (504);
das Modellierungsmodul (504) konfiguriert ist, um vor dem sequentiellen Eingeben der Vielzahl von Gesichtsbildern in das voreingestellte Gesichtsmerkmalsmodell
eine Gesichtstrainingsprobe zu erfassen, wobei die Gesichtstrainingsprobe ein Gesichtsbild und eine Beschriftung umfasst;
gemäß der Gesichtstrainingsprobe ein anfängliches Gesichtsmerkmalsmodell nach dem Training zu erfassen; wobei das anfängliche Gesichtsmerkmalsmodell eine Eingabeschicht, eine Merkmalsschicht, eine Klassifizierungsschicht und eine Ausgabeschicht umfasst; und
die Klassifizierungsschicht im anfänglichen Gesichtsmerkmalsmodell zu löschen, um das voreingestellte Gesichtsmerkmalsmodell zu erhalten.

15. Computerlesbares Speichermedium, wobei das computerlesbare Speichermedium computerausführbare Anweisungen speichert, und wenn ein Prozessor die computerausführbaren Anweisungen ausführt, das auf Sprachinteraktion basierende Kontexterfassungsverfahren nach einem der Ansprüche 1 bis 8 implementiert wird.

## Revendications

1. Procédé d'acquisition de contexte basé sur une interaction vocale, comprenant :
l'acquisition (201) d'une image de scène collectée par un dispositif de collecte d'image à un point de départ de voix d'une conversation courante, et l'extraction d'une caractéristique faciale de chaque utilisateur dans l'image de scène ;
s'il est déterminé qu'il y a une seconde caractéristique faciale concordant avec une première caractéristique faciale selon la caractéristique faciale de chaque utilisateur et une base de données faciales, l'acquisition (203) d'un premier identifiant d'utilisateur correspondant à la seconde caractéristique faciale à partir de la base de données faciales, dans lequel la première caractéristique faciale est une caractéristique faciale d'un utilisateur, la seconde caractéristique faciale est une autre caractéristique faciale d'un utilisateur dans un état de conversation stockée dans la base de données faciales ; et **caractérisé par** :
la détermination (204) de si une conversation stockée correspondant au premier identifiant d'utilisateur est stockée dans une base de données vocales ;
s'il est déterminé que la conversation stockée correspondant au premier identifiant d'utilisateur est stockée dans la base de données vocales, la détermination (205) d'un contexte d'une interaction vocale selon la conversation courante et la conversation stockée et, après qu'un point final de voix de la conversation courante a été obtenu, le stockage de la conversation courante dans la base de données vocales ; et
s'il est déterminé que la conversation stockée correspondant au premier identifiant d'utilisateur n'est pas stockée dans la base de données vocales, le stockage (206) de la conversation courante et du premier identifiant d'utilisateur dans la base de données vocales de manière associée.

2. Procédé selon la revendication 1, dans lequel, s'il est déterminé qu'il n'y a pas de seconde caractéristique faciale concordant avec la première caractéristique faciale selon la caractéristique faciale de chaque utilisateur et la base de données faciales, le procédé comprend en outre :
l'analyse (207) de paramètres comprenant la caractéristique faciale de chaque utilisateur, l'acquisition d'un utilisateur cible dans l'état de conversation, et la génération d'un deuxième identifiant d'utilisateur de l'utilisateur cible ; et
lorsque le point final de voix est détecté, le stockage (208) de la conversation courante et du deuxième identifiant d'utilisateur dans la base de données vocales de manière associée, et le stockage de la caractéristique faciale de l'utilisateur cible et du deuxième identifiant d'utilisateur dans la base de données faciales de manière associée.

3. Procédé selon la revendication 1, dans lequel la détermination d'un contexte d'une interaction vocale selon la conversation courante et la conversation stockée comprend :
l'acquisition d'un point de départ de voix et d'un point final de voix d'une dernière conversation correspondant au premier identifiant d'utilisateur à partir de la base de données vocales selon le premier identifiant d'utilisateur ; et
s'il est déterminé qu'un intervalle de temps entre le point final de voix de la dernière conversation et le point de départ de voix de la conversation courante est inférieur à un intervalle prédéfini, la détermination du contexte de l'interaction vocale selon la conversation courante et la conversation stockée.

4. Procédé selon la revendication 3, dans lequel, s'il est déterminé que l'intervalle de temps entre le point final de voix de la dernière conversation et le point de départ de voix de la conversation courante est supérieur ou égal à l'intervalle prédéfini, le procédé comprend en outre :
la suppression du premier identifiant d'utilisateur et d'une conversation stockée correspondante stockés de manière associée de la base de données vocales.

5. Procédé selon la revendication 1, dans lequel le procédé comprend en outre :
la suppression d'un troisième identifiant d'utilisateur qui ne concorde pas dans une période de temps prédéfinie et d'une caractéristique faciale correspondante de la base de données faciales.

6. Procédé selon la revendication 1, dans lequel l'extraction d'une caractéristique faciale de chaque utilisateur dans l'image de scène comprend :
la réalisation d'un processus de matage sur l'image de scène pour acquérir une image faciale de chaque visage ; et
l'entrée d'une pluralité d'images faciales dans un modèle de caractéristiques faciales prédéfini de manière séquentielle, pour acquérir la caractéristique faciale de chaque utilisateur sortie de manière séquentielle par le modèle de caractéristiques faciales.

7. Procédé selon la revendication 6, dans lequel, avant d'entrer la pluralité d'images faciales dans le modèle de caractéristiques faciales prédéfini de manière séquentielle, le procédé comprend en outre :
l'acquisition d'un échantillon d'apprentissage de visage, l'échantillon d'apprentissage de visage comprenant une image faciale et une étiquette ;
l'acquisition, selon l'échantillon d'apprentissage de visage, d'un modèle de caractéristiques faciales initial après un apprentissage ; le modèle de caractéristiques faciales initial comprenant une couche d'entrée, une couche de caractéristiques, une couche de classification, et une couche de sortie ; et
la suppression de la couche de classification dans le modèle de caractéristiques faciales initial pour obtenir le modèle de caractéristiques faciales prédéfini.

8. Procédé selon la revendication 7, dans lequel le modèle de caractéristiques faciales est un modèle de réseau neuronal convolutif profond, et la couche de caractéristiques comprend une couche de convolution, une couche de regroupement, et une couche entièrement connectée.

9. Dispositif d'acquisition de contexte (50), basé sur une interaction vocale, comprenant :
un module d'extraction (501), configuré pour acquérir une image de scène collectée par un dispositif de collecte d'image à un point de départ de voix d'une conversation courante, et extraire une caractéristique faciale de chaque utilisateur dans l'image de scène ;
un module de concordance (502), configuré pour, s'il est déterminé qu'il y a une seconde caractéristique faciale concordant avec une première caractéristique faciale selon la caractéristique faciale de chaque utilisateur et la base de données faciales, acquérir un premier identifiant d'utilisateur correspondant à la seconde caractéristique faciale à partir de la base de données faciales, dans lequel la première caractéristique faciale est une caractéristique faciale d'un utilisateur, et la seconde caractéristique faciale est une caractéristique faciale d'un utilisateur dans un état de conversation stockée dans la base de données faciales ; et **caractérisé en ce qu'**il comprend en outre :
un module d'acquisition (503), configuré pour déterminer si une conversation stockée correspondant au premier identifiant d'utilisateur est stockée dans une base de données vocales, s'il est déterminé que la conversation stockée correspondant au premier identifiant d'utilisateur est stockée dans la base de données vocales, déterminer un contexte d'une interaction vocale selon la conversation courante et la conversation stockée et, après qu'un point final de voix de la conversation courante a été obtenu, stocker la conversation courante dans la base de données vocales et, s'il est déterminé que la conversation stockée correspondant au premier identifiant d'utilisateur n'est pas stockée dans la base de données vocales, stocker la conversation courante et le premier identifiant d'utilisateur dans la base de données vocales de manière associée.

10. Procédé selon la revendication 9, dans lequel le module de concordance (502) est configuré pour :
s'il est déterminé qu'il n'y a pas de seconde caractéristique faciale concordant avec la première caractéristique faciale selon la caractéristique faciale de chaque utilisateur et une base de données faciales, analyser des paramètres comprenant la caractéristique faciale de chaque utilisateur, acquérir un utilisateur cible dans un état de conversation, et générer un deuxième identifiant d'utilisateur de l'utilisateur cible ; et
lorsque le point final de voix est détecté, stocker la conversation courante et le deuxième identifiant d'utilisateur dans la base de données vocales de manière associée, et stocker la caractéristique faciale de l'utilisateur cible et le deuxième identifiant d'utilisateur dans la base de données faciales de manière associée.

11. Dispositif (50) selon la revendication 9, dans lequel le module d'acquisition (503) est spécifiquement configuré pour :
acquérir un point de départ de voix et un point final de voix d'une dernière conversation correspondant au premier identifiant d'utilisateur à partir de la base de données vocales selon le premier identifiant d'utilisateur ; et
s'il est déterminé qu'un intervalle de temps entre le point final de voix de la dernière conversation et le point de départ de voix de la conversation courante est inférieur à un intervalle prédéfini, déterminer le contexte de l'interaction vocale selon la conversation courante et la conversation stockée.

12. Dispositif (50) selon la revendication 11, dans lequel le module d'acquisition (503) est en outre configuré pour :
s'il est déterminé que l'intervalle de temps entre le point final de voix de la dernière conversation et le point de départ de voix de la conversation courante est supérieur ou égal à l'intervalle prédéfini, supprimer le premier identifiant d'utilisateur et une conversation stockée correspondante stockés de manière associée de la base de données vocales.

13. Dispositif selon la revendication 9, dans lequel le module d'extraction est spécifiquement configuré pour :
réaliser un processus de matage sur l'image de scène pour acquérir une image faciale de chaque visage ; et
entrer une pluralité d'images faciales dans un modèle de caractéristiques faciales prédéfini de manière séquentielle, et acquérir la caractéristique faciale de chaque utilisateur sortie de manière séquentielle par le modèle de caractéristiques faciales.

14. Dispositif (50) selon la revendication 14, comprenant en outre : un module de modélisation (504) ;
le module de modélisation (504) est configuré pour, avant d'entrer de manière séquentielle la pluralité d'images faciales dans le modèle de caractéristiques faciales prédéfini,
acquérir un échantillon d'apprentissage de visage, l'échantillon d'apprentissage de visage comprenant une image faciale et une étiquette ;
acquérir, selon l'échantillon d'apprentissage de visage, un modèle de caractéristiques faciales initial après un apprentissage ; le modèle de caractéristiques faciales initial comprenant une couche d'entrée, une couche de caractéristiques, une couche de classification, et une couche de sortie ; et
supprimer la couche de classification dans le modèle de caractéristiques faciales initial pour obtenir le modèle de caractéristiques faciales prédéfini.

15. Support de stockage lisible par ordinateur, dans lequel le support de stockage lisible par ordinateur stocke des instructions exécutables par ordinateur et, lorsqu'un processeur exécute les instructions exécutables par ordinateur, le procédé d'acquisition de contexte basé sur une interaction vocale selon l'une quelconque des revendications 1 à 8 est mis en oeuvre.
